# EUROPEAN PATENT APPLICATION

(11) **EP 3 093 430 A1**
(43) Date of publication of application: **16.11.2016**
(21) Application number: 16157538.6
(22) Date of filing: 26.02.2016
(51) Int. Cl.: F01B 7/02, F02D 41/34, F02D 41/30, F02D 41/00, F02D 41/40, F02D 41/38

(54) **MULTI INJECTOR THERMAL MANAGEMENT SYSTEM AND METHOD**

(30) Priority: 27.02.2015 US 201562121788 P; 23.02.2016 US 201615050792
(71) Applicant: AVL Powertrain Engineering, Inc., Plymouth MI 48170 (US)
(72) Inventor: Johnson, Gustav R., Canton, Michigan 48187 (US)
(74) Representative: Witte, Weller & Partner Patentanwälte mbB

(57) **Abstract**

A system according to the present disclosure controls first and second fuel injectors to inject fuel into a cylinder of an engine based on a measured crankshaft position. The system controls the first and second fuel injectors based on a first target injection parameter once every N firing cycles of the cylinder, where N is equal to the number of fuel injectors that are operable to inject fuel into the cylinder. The first target injection parameter includes at least one of a first pulse width and a first start-of-injection (SOI) timing. The system controls the first and second fuel injectors based on a second target injection parameter once every N firing cycles of the cylinder. The second target injection parameter includes at least one of a second pulse width and a second SOI timing that are different than the first pulse width and the first SOI timing, respectively.

## Description

### FIELD

The present disclosure relates to internal combustion engines, and more specifically, to multi injector thermal management systems and methods.

### BACKGROUND

The background description provided here is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

Opposed piston engines include two pistons housed within a single cylinder that move in an opposed, reciprocal manner within the cylinder. In this regard, during one stage of operation, the two pistons are moving away from one another within the cylinder. During another stage of operation, the two pistons are moving towards one another within the cylinder.

A fuel injector injects fuel into the cylinder through injection ports defined by the cylinder. As the pistons move towards one another within the cylinder, they compress and, thus, cause the ignition of a fuel injected into the cylinder by the fuel injector. In some configurations, each cylinder can include more than one fuel injector. In addition, each opposed piston engine can include more than one cylinder.

An engine controller controls the timing and duration of fuel injections performed by the fuel injectors. For example, the engine controller may control the fuel injectors based on a target start-of-injection (SOI) timing and a target pulse width. The engine controller may specify the same SOI timing and the same pulse width for all of the injectors over several firing cycles of each cylinder and over several cycles through a firing order of the engine. In turn, local hot spots may develop within the cylinder. Thus, cooling devices such as high capacity coolant pumps and a charge air cooler may be required to avoid damaging the engine.

### SUMMARY

A system according to the present disclosure includes a crankshaft position sensor and an injector control module. The crankshaft position sensor measures an angular position of a crankshaft in an engine. The injector control module controls a first fuel injector and a second fuel injector to inject fuel into a first cylinder of the engine based on the measured crankshaft position.

The injector control module controls the first fuel injector based on a first target injection parameter once every N firing cycles of the first cylinder. The first target injection parameter includes at least one of a first pulse width and a first start-of-injection (SOI) timing. N is equal to the number of fuel injectors that are operable to inject fuel into the first cylinder;

The injector control module controls the first fuel injector based on a second target injection parameter once every N firing cycles of the first cylinder. The second target injection parameter includes at least one of a second pulse width and a second SOI timing that are different than the first pulse width and the first SOI timing, respectively. The injector control module controls the second fuel injector based on the first target injection parameter once every N firing cycles of the first cylinder. The injector control module controls the second fuel injector based on the second target injection parameter once every N firing cycles of the first cylinder

A method according to the present disclosure includes measuring an angular position of a crankshaft in an engine, and controlling a first fuel injector and a second fuel injector to inject fuel into a first cylinder of the engine based on the measured crankshaft position. The method further includes controlling the first fuel injector based on a first target injection parameter once every N firing cycles of the first cylinder. The first target injection parameter includes at least one of a first pulse width and a first start-of-injection (SOI) timing. N is equal to the number of fuel injectors that are operable to inject fuel into the first cylinder.

The method further includes controlling the first fuel injector based on a second target injection parameter once every N firing cycles of the first cylinder. The second target injection parameter includes at least one of a second pulse width and a second SOI timing that are different than the first pulse width and the first SOI timing, respectively. The method further includes controlling the second fuel injector based on the first target injection parameter once every N firing cycles of the first cylinder, and controlling the second fuel injector based on the second target injection parameter once every N firing cycles of the first cylinder.

Further areas of applicability of the present disclosure will become apparent from the detailed description, the claims and the drawings. The detailed description and specific examples are intended for purposes of illustration only and are not intended to limit the scope of the disclosure.

### BRIEF DESCRIPTION OF THE DRAWINGS

The present disclosure will become more fully understood from the detailed description and the accompanying drawings, wherein:
FIG. 1 is an exploded view of an opposed-piston engine system including an engine control module according the principles of the present disclosure;
FIG. 2 is a section view of the opposed-piston engine system of FIG. 1 taken along a longitudinal axis of the cylinder;
FIG. 3 is a section view of the opposed-piston engine system of FIG. 1 taken along a transverse axis of the cylinder that is perpendicular to the longitudinal axis;
FIG. 4 is a functional block diagram of the engine control module of FIG. 1;
FIG. 5 is a flowchart illustrating an example engine control method according to the principles of the present disclosure; and
FIGS. 6A, 6B, and 6C include a graph and tables illustrating an average engine torque output or load and a cylinder torque output or load according to the principles of the present disclosure.

In the drawings, reference numbers may be reused to identify similar and/or identical elements.

### DETAILED DESCRIPTION

An engine according to the present disclosure includes a cylinder, one or more pistons disposed in the cylinder, and at least two fuel injectors operable to inject fuel into a combustion chamber of the cylinder that is at least partially defined by the pistons. An engine control system and method according to the present disclosure determines at least two different injection assignments for the at least two fuel injectors. Each of the injection assignments specifies one or more target injection parameters such as a target start-of-injection (SOI) timing, a target pulse width, and/or a target number of injections per firing cycle of a cylinder.

The engine control system and method then rotates the injection assignments through the at least two fuel injectors over multiple firing cycles of the cylinder. For example, the engine control system and method may control first and second fuel injectors based on first and second injection assignments, respectively, during one firing cycle of the cylinder. The engine control system and method may then control the first and second fuel injectors based on the second and first injection assignments, respectively, during the next firing cycle of the cylinder.

The second injection assignment may include target injection parameters have different values than the values of the target injection parameters included in the first injection assignment. For example, the first injection assignment may include a first target pulse width, and the second injection assignment may include a second target pulse width that is different than the first target pulse width. Similarly, the first injection assignment may include a first target SOI timing, and the second injection assignment may include a second target SOI timing that is different than the first target SOI timing.

By rotating the injection assignments through the fuel injectors, the engine control system and method homogenizes combustion within the cylinder and thereby reduces localized hot spots due to combustion. Thus, engine damage due to overheating may be prevented without using cooling devices to cool the engine. In turn, the mass and cost of the engine may be reduced.

For an engine that includes multiple cylinders, the engine control system and method may further reduce localized hot spots by rotating cylinder torque assignments through the cylinders over multiple firing order cycles of the engine. For example, the engine control system and method may control first and second sets of fuel injectors of first and second cylinders based on first and second cylinder torque assignments, respectively, during one firing order cycle of the engine. The engine control system and method may then control the first and second sets of fuel injectors based on the second and first cylinder torque assignments, respectively, during the next firing order cycle of the engine.

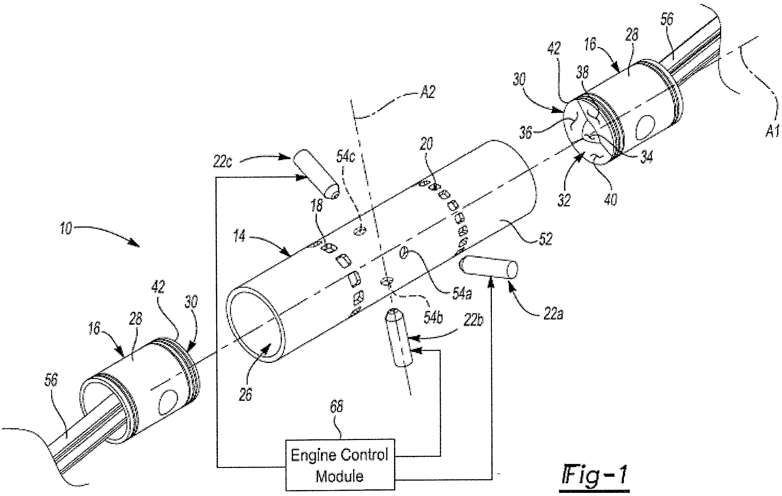

Referring now to Figures 1 through 3, an engine system 10 is provided. In one configuration, the engine system 10 may include an opposed-piston, two-stroke compression-ignition engine for use in a vehicle or other machine. However, the engine system 10 may include engines having other configurations such as a spark-ignition engine and/or a four-stroke engine.

The engine system 10 may include a cylinder or cylinder liner 14, a pair of pistons 16, a plurality of outlet ports 18, a plurality of inlet ports 20, and at least two fuel injectors 22. Although only one cylinder 14 is shown, the engine system 10 may include any number of cylinders 14, each including the pair of pistons 16. The cylinders 14 may be arranged so that their longitudinal axes are disposed within a common plane, or the cylinders 14 may be arranged so that their longitudinal axes are offset from one another as disclosed in U.S. Provisional Application No. 62/121,009, entitled "Opposed Piston Three Nozzle Combustion Chamber Design," and U.S. Provisional Application No. 62/121,879, entitled Opposed Piston Three Nozzle Piston Bowl Design," which were both filed on February 27, 2015 and are both incorporated by reference herein.

The cylinder 14 may be formed from a material such as iron, steel, or a suitable metallic alloy, and may extend along a longitudinal axis A1. In this regard, the longitudinal axis A1 may be a central longitudinal axis about which the cylinder 14 is symmetrically disposed. The cylinder 14 may also have a transverse axis A2 extending in a direction substantially perpendicular to the longitudinal axis A1. A bore 26 may extend through, or otherwise be defined by, the cylinder 14 along the longitudinal axis A1. The outlet ports 18 and the inlet ports 20 may be configured to fluidly communicate with the bore 26. In this regard, the inlet ports 20 can be configured to deliver air (e.g., ambient air, air from a turbocharger or other portion of an exhaust gas regeneration system (not shown), etc.) to the bore 26 for combustion, while the outlet ports 18 can be configured to remove exhaust gases from the bore 26 after combustion.

The pistons 16 may be slidably disposed in the bore 26 of the cylinder 14 for opposed, reciprocating motion along the longitudinal axis A1. Each piston 16 may include a skirt 28 and a crown 30. In some configurations, the skirt 28 can be integrally or monolithically formed with the crown 30. The crown 30 may include a recess 32 that is at least partially formed or defined by a bottom surface 34, first side surface 36, a second side surface 38, and a third side surface 40. In some configurations, the bottom surface 34 may be concave and symmetrically disposed about the longitudinal axis A1. The first, second, and third side surfaces 36, 38, 40 may be substantially identical to each another. In this regard, the first, second, and third side surfaces 36, 38, 40 may extend from an end or rim 42 of the piston 16 to the bottom surface 34. Accordingly, the first, second, and third side surfaces 36, 38, 40 may be symmetrically disposed about the longitudinal axis A1. In some configurations, the first, second, and third side surfaces 36, 38, 40 may include a concave shape or profile. It will be appreciated, however, that the first, second, and third side surfaces 36, 38, 40 may include various shapes or profiles within the scope of the present disclosure.

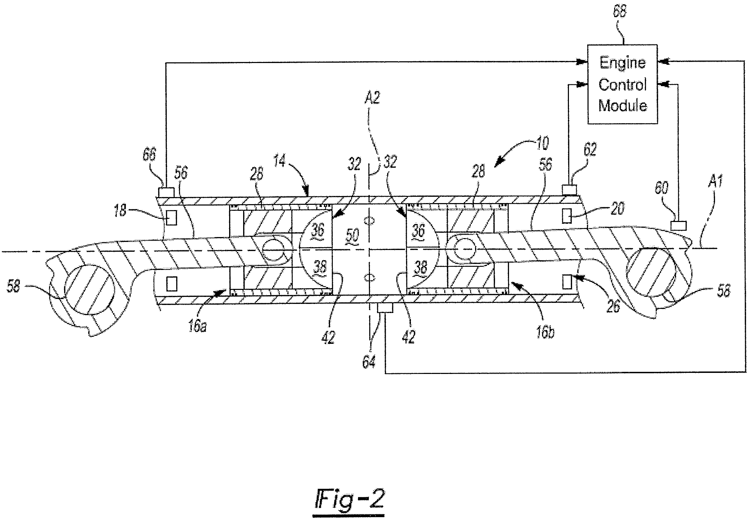

As illustrated in Figure 2, in an assembled configuration, the recess 32 of a first piston 16a and the recess 32 of a second piston 16b may define a chamber 50 therebetween. The first and second pistons 16a, 16b may be disposed within the bore 26 such that the first, second, and third side surfaces 36, 38, 40 of the first piston 16a are aligned with the first, second, and third side surfaces 36, 38, 40, respectively, of the second piston 16b. Accordingly, in some configurations the chamber 50 may be symmetrically disposed relative to the longitudinal axis A1. Specifically, the chamber 50 may be symmetric relative to a cross section of the engine system 10 intersecting the longitudinal axis A2 (FIG. 2), and symmetric relative to a cross section of the engine system 10 intersecting the transverse axis A1 (FIG. 2). In other configurations, the first, second, and third side surfaces 36, 38, 40 of the first piston 16a may be offset from, or otherwise have a different shape or profile than the first, second, and third side surfaces 36, 38, 40 of the second piston 16b, such that the chamber 50 may be asymmetric relative to the cross section of the engine system 10 intersecting the longitudinal axis A1 (FIG. 2), and/or asymmetric relative to the cross section of the engine system 10 intersecting the transverse axis A2 (FIG. 2).

The outlet ports 18 and the inlet ports 20 may be defined by the cylinder 14 and extend radially through a perimeter surface 52 of the cylinder 14. The cylinder 14 may also define injection ports 54 that extend radially through the perimeter surface 52 of the cylinder 14. The fuel injectors 22 are operable to inject fuel into the bore 26 through the injection ports 54. In the example shown, the injection ports 54 includes first, second, and third injection ports 54a, 54b, and 54c aligned with one another along the longitudinal axis A1 and symmetrically disposed about the longitudinal axis A1. In addition, the fuel injectors 22 include first, second, and third fuel injectors 22a, 22b, 22c operable to inject fuel through the first, second, and third injection ports 54a, 54b, and 54c, respectively. However, the engine system 10 may include additional or fewer fuel injectors 22 and additional or fewer injection ports 54. For example, the cylinder 14 may define only two injection ports 54 that are disposed opposite from one another along the transverse axis A2, and the engine system 10 may include only two fuel injectors 22 that are each operable to inject fuel into one of the injection ports 54. In addition, the injection ports 54 may not be aligned with one another along the longitudinal axis A1 or symmetrically disposed about the longitudinal axis A1.

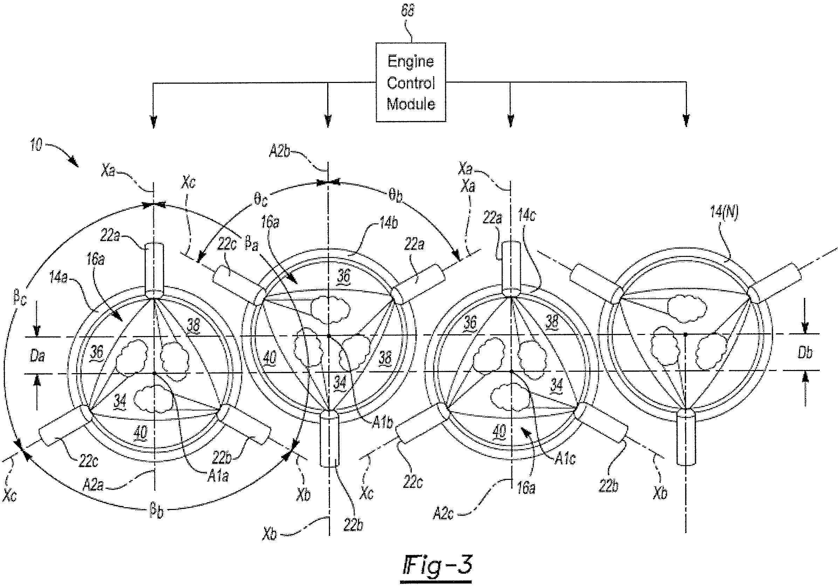

As illustrated in Figure 3, the first piston 16a of a first cylinder 14a may be angularly offset relative to the orientation of the first piston 16a of a second cylinder 14b. Similarly, the first piston 16a of a third cylinder 14c may be angularly offset relative to the orientation of the first piston 16a of the second cylinder 14b. In this regard, the first piston 16a of the second cylinder 14b may be rotated by a first angle about the longitudinal axis A1b relative to the orientation of the first piston 16a of the first cylinder 14a about the longitudinal axis A1a, and the first piston 16a of the third cylinder 14c may be rotated by a second angle about the longitudinal axis A1c relative to the orientation of the first piston 16a of the second cylinder 14b about the longitudinal axis A1b. In some configurations, the first angle may be substantially equal to the second angle, such that the first piston 16a of the first cylinder 14a is substantially angularly aligned with the first piston 16a of the third cylinder 14c relative to, or about, the longitudinal axes A1a and A1c. It will be appreciated that the second pistons 16b of the first, second, and third cylinders 14a, 14b, 14c may also be angularly offset from one another as described above with respect to the first pistons 16a.

It will be appreciated that as the first and second pistons 16a, 16b slide or otherwise move within the bore 26 between a bottom dead center position (not shown) and a top dead center position (FIG. 2), the size of the chamber 50 will vary between a fully compressed configuration and a fully expanded configuration. In this regard, each piston 16 may be supported by, or otherwise coupled to, a connecting rod 56. The connecting rod 56 can be supported by, or otherwise coupled to, a crankshaft 58. As the pistons 16 slide or otherwise translate within the bore 26 of the cylinder 14, the translational movement of the pistons 16 can be converted to the rotational movement of the crankshaft 58 through the connecting rod 56.

As illustrated in Figure 3, the first fuel injector 22a may extend from the cylinder 14 along an axis Xa, the second fuel injector 22b may extend from the cylinder along an axis Xb, and the third fuel injector 22c may extend from the cylinder along an axis Xc. The axis Xa may be offset from the axis Xb by an angle βa, the axis Xb may be offset from the axis Xc by an angle βb, and the axis Xc may be offset from the axis Xa by an angle βc. In some configurations, the angle βa may be substantially equal to the angle βb, and the angle βb may be substantially equal to the angle βc, such that the fuel injectors 22a, 22b and 22c are symmetrically disposed about the longitudinal axis A1. In this regard, the first fuel injector 22a may be disposed or otherwise aligned with a point of intersection of the first and second surfaces 36, 38 of the first piston 16a, the second fuel injector 22b may be disposed or otherwise aligned with a point of intersection of the second and third surfaces 38, 40 of the first piston 16a, and the third fuel injector 22c may be disposed or otherwise aligned with a point of intersection of the first and third surfaces 36, 40 of the first piston 16a. In one example, βa, βb, and βc may each be equal to an angle between 100 degrees and 140 degrees. In one particular example, βa, βb, and βc may each be equal to 120 degrees. It will also be appreciated that the angle βa may differ from the angle βb, and/or the angle βb may differ from the angle βc.

The fuel injectors 22 may be in fluid communication with the bore 26. In this regard, the fuel injectors 22 can be configured to spray or otherwise deliver a volume of fuel to the chamber 50 for combustion. In this regard, the fuel injectors 22 may be aligned relative to the longitudinal axis A1. In some configurations the fuel injectors 22a, 22b, 22c may deliver the volume of fuel in a direction substantially along or parallel to the axes Xa, Xb, Xc, respectively. In other configurations, the volume of fuel may be delivered in a direction that is offset from the axes Xa, Xb, Xc.

As illustrated in Figure 3, in the assembled configuration the cylinders 14 may be positioned within the engine system 10 such that the longitudinal axes A1 are substantially parallel to each other. In addition, cylinders 14 may be positioned within the engine such that the fuel injectors 22 of the first cylinder 14a are aligned with the fuel injectors 22 of the second and/or third cylinders 14b, 14c relative to the longitudinal axes A1b, A1c, respectively. In this regard, the axes Xa, Xb, Xc of the fuel injectors 22 of one or more of the cylinders 14 may extend in, or otherwise define, a plane. In some configurations, all of the axes Xa, Xb, Xc of the fuel injectors 22 of the cylinders 14 may extend in, or otherwise define, a plane. In some configurations, the longitudinal axis A1a of the first cylinder 14a may also be offset from the longitudinal axis A1b of the second cylinder 14b that is adjacent to the first cylinder 14a. In this regard, the longitudinal axis A1b may be offset in a first direction from the longitudinal axis A1a by a distance Da. Similarly, the longitudinal axis A1c of the third cylinder 14c, that is adjacent to the second cylinder 14b, may be offset in a second direction from the longitudinal axis A1b by a distance Db. The second direction may be opposite the first direction. In some configurations, the distance Db may be substantially equal to the distance Da, such that the longitudinal axis A1c is aligned or otherwise coplanar with the longitudinal axis A1b. As discussed earlier, the engine system 10 may include any number (N) of cylinders 14. In this regard, it will be appreciated that each cylinder 14(N) may be offset from an adjacent cylinder 14(N-1) by the distance Da, and offset from an adjacent cylinder 14(N+1) by the distance Db.

With continued reference to Figure 3, the fuel injectors 22a, 22b, 22c of the first cylinder 14a may also be angularly offset about the longitudinal axis A1a relative to the fuel injectors 22a, 22b, 22c, respectively, of the second cylinder 14b. Specifically, the first fuel injector 22a of the second cylinder 14b may be angularly offset about the longitudinal axis A1b relative to the orientation of the first fuel injector 22a of the first cylinder 14a about the longitudinal axis A1a. In this regard, the axis Xa of the first fuel injector 22a of the first cylinder 14a may be substantially aligned with the transverse axis A2a of the first cylinder 14a, while the axis Xa of the first fuel injector 22a of the second cylinder 14b may be offset from the transverse axis A2b of the second cylinder 14b by an angle θb. Similarly, the axis Xb of the second fuel injector 22b of the first cylinder 14a may be offset from the transverse axis A2a of the first cylinder 14a by the angle βa, while the axis Xb of the second fuel injector 22b of the second cylinder 14b may be substantially aligned with the transverse axis A2b of the second cylinder 14b. Similarly, still, the axis Xc of the third fuel injector 22c of the first cylinder 14a may be offset from the transverse axis A2a of the first cylinder 14a by the angle βc, while the axis Xc of the third fuel injector 22c of the second cylinder 14b may be offset from the transverse axis A2b of the second cylinder 14b by an angle θc. As previously discussed, the angles βa, βb, and βc may be substantially equal to each other. In addition, the axis Xa of the first fuel injector 22a of the first cylinder 14a may be offset from the axis Xa of the first fuel injector 22a of the second cylinder 14b by an angle between 45 and 75 degrees, and in some configurations, substantially equal to 60 degrees. Similarly, the axes Xb, Xc of the second and third fuel injectors 22b, 22c of the first cylinder 14a may be offset from the axes Xb, Xc, respectively, of the second and third fuel injectors 22b, 22c of the second cylinder 14b by an angle between 45 and 75 degrees, and in some configurations, substantially equal to 60 degrees.

The configuration of the cylinders 14, including the distances Da and Db, the configuration of the fuel injectors 22a, 22b, 22c, including the angles β and θ, and the configuration of the pistons 16a, 16b, can allow for the closest possible arrangement of the cylinders 14 within the engine system 10 having three fuel injectors 22. Specifically, arranging the cylinders 14 and the fuel injectors 22a, 22b, 22c in the manner described can help to prevent the fuel injectors 22a, 22b, 22c from contacting or otherwise interfering with an adjacent cylinder 14 and/or the fuel injectors 22a, 22b, 22c of the adjacent cylinder 14, thus allowing for a reduction in the size of the engine system 10. Moreover, the inclusion of three fuel injectors 22 within the engine system 10 can help to ensure improved combustion performance, including efficient utilization and combustion of air within the chamber 50, as well as the efficient mixing of fuel from each of the fuel injectors 22 within the chamber 50.

The engine system 10 further includes a crankshaft position (CKP) sensor 60, a manifold airflow (MAF) sensor 62, a cylinder pressure (CLP) sensor 64, an exhaust temperature (EXT) sensor 66, and an engine control module (ECM) 68. The CKP sensor 60 measures the angular position of the crankshaft 58 and generates a signal indicating the measured crankshaft position. The MAF sensor 62 measures the mass flow rate of intake air entering the cylinder 14 through the inlet ports 20 and generates a signal indicating the mass flow rate of intake air. The CLP sensor 64 measures the pressure within the cylinder 14. The EXT sensor 66 measures the temperature of exhaust gas exiting the cylinder 14 through the outlet ports 18.

The ECM 68 controls the timing and duration of fuel injections performed by the fuel injectors 22. The ECM 68 may also control the number of fuel injections performed by the fuel injectors 22 for each firing cycle of the cylinder 14. The ECM 68 may control the timing, duration, and number of fuel injections based on a target engine torque output and/or engine operating conditions such as engine speed and engine load.

The ECM 68 may control the timing, duration, and number of fuel injections performed by the fuel injectors 22 using a target start-of-injection (SOI) and a target pulse width, and a target number of injections, respectively. The target SOI timing and the target pulse width may be specified in terms of the angular position of the crankshaft 58 (or crank angle). Thus, for example, the ECM 68 may command the fuel injector 22a to start injecting fuel when the crankshaft position from the CKP sensor 60 is equal to the target SOI timing.

Although Figure 2 only shows one CKP sensor, the engine system 10 may include a CKP sensor for each of the crankshafts 58. In addition, the ECM 68 may control the fuel injectors 22 based on inputs received from one or more of the CKP sensors. For example, the ECM 68 may control the fuel injectors 22 based on an average value of the crankshaft positions from the CKP sensors, and/or the ECM 68 may control the fuel injectors 22 independent of a crankshaft position from a CKP sensor that is diagnosed as faulty.

As illustrated in Figure 3, the ECM 68 may generate signals to control the timing, duration, and number of fuel injections performed by all three of the fuel injectors 22a, 22b, 22c for all of the cylinders 14a, 14b, 14c, 14(N) in the engine system 10. Although only four signals are shown extending from the ECM 68 in Figure 3, it should be understood that the ECM 68 may generate a signal for each of the fuel injectors 22a, 22b, 22c that are operable to inject fuel into the cylinders 14a, 14b, 14c, 14(N). Thus, in the four cylinder arrangement shown in Figure 3, the ECM 68 may generate 12 signals.

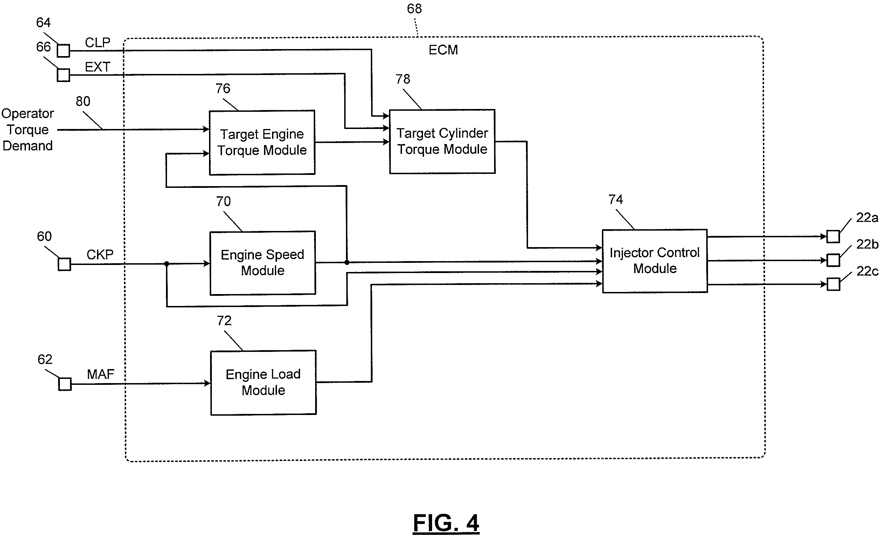

With additional reference to Figure 4, an example implementation of the ECM 68 includes an engine speed module 70, and engine load module 72, an injector control module 74, a target engine torque module 76, and a target cylinder torque module 78. For ease of discussion, the ECM 68 is initially described below in the context of only the first cylinder 14a and the fuel injectors 22 that are operable to inject fuel into the first cylinder 14a. However, it should be understood that the ECM 68 may control the fuel injectors 22 of the cylinders 14b, 14c, 14(N) in a similar manner.

The engine speed module 70 determines the rotational speed of the crankshaft 58, which may be referred to as engine speed. The engine speed module 70 may determine the engine speed based on the crankshaft position from the CKP sensor 60. For example, the engine speed module 70 may calculate the engine speed based on a period that elapses as the crankshaft 58 completes one or more revolutions. The engine speed module 70 outputs the engine speed.

The engine load module 72 determines the amount of load applied to the crankshaft 58. The engine load module 72 may determine the engine load based on the mass flow rate of intake air from the MAF sensor 62. For example, the engine load module 72 may determine the engine load based on a mapping of intake air flow rate to engine load. Additionally or alternatively, the engine load module 72 may determine the engine load based on other engine operating conditions such as intake manifold pressure, engine coolant temperature, engine speed, and/or accelerator pedal position. Additionally or alternatively, the engine load module 72 may determine the engine load based on the rate at which fuel is injected into the cylinders 14 by the fuel injectors 22. The engine load module 72 may estimate the fuel injection rates based on fuel injection commands sent from the injector control module 74 to the fuel injectors 22.

The injector control module 74 controls the timing and duration of fuel injections performed by the fuel injectors 22. The injector control module 74 may also control the number of injections performed by the fuel injectors 22 for each combustion cycle of the cylinder 14a (or each combustion event in the cylinder 14a). In various implementations, the ECM 68 may include control modules (not shown) that control engine actuators other than the fuel injectors 22. For example, the ECM 68 may include a spark control module and a throttle control module that control spark timing and throttle position, respectively.

The injector control module 74 may control the timing, duration, and number of fuel injections performed by the fuel injectors 22 using target injection parameters. For example, the injector control module 74 may control the injectors to achieve a target start-of-injection (SOI) timing, a target pulse width, and a target number of injections per combustion cycle of the cylinder 14a. One or more target injections parameters for a single combustion cycle of the cylinder 14a may be collectively referred to as an injection assignment.

The target SOI timing and the target pulse width may be specified in terms of the angular position or the crankshaft (e.g., in terms of crank angle degrees). Thus, the injector control module 74 may control the timing and duration of fuel injections performed by the fuel injectors 22 based on the crankshaft position from the CKP sensor 60. For example, the injector control module 74 may command the fuel injector 22a to start injecting fuel into the cylinder 14a when the crankshaft position from the CKP sensor 60 is equal to the target SOI timing value for the fuel injector 22a.

The injector control module 74 determines multiple injection assignments for each combustion cycle of the cylinder 14a. Each injection assignment may include a target SOI timing, a target pulse width, and/or a target number of injections per combustion cycle of the cylinder 14a. The number of injection assignments determined by the injector control module 74 may be equal to the number of the fuel injectors 22 operable to inject fuel into the cylinder 14a.

Thus, for the cylinder 14a, the injector control module 74 may determine a first injection assignment, a second injection assignment, and a third injection assignment. The first injection assignment may include a first target SOI timing, a first target pulse width, and/or a first target number of injections per combustion cycle of the cylinder 14a. The second injection assignment may include a second target SOI timing, a second target pulse width, and/or a second target number of injections per combustion cycle of the cylinder 14a. The second target SOI timing, the second target pulse width, and the second target number of injections may be different than the first target SOI timing, the first target pulse width, and the first target number of injections, respectively.

The third injection assignment may include a third target SOI timing, a third target pulse width, and/or a third target number of injections per combustion cycle of the cylinder 14a. The third target SOI timing, the third target pulse width, and the third target number of injections may be different than the first target SOI timing, the first target pulse width, and the first target number of injections, respectively. In addition, the third target SOI timing, the third target pulse width, and the third target number of injections may be different than the second target SOI timing, the second target pulse width, and the second target number of injections, respectively.

The injector control module 74 rotates the injection assignments through the fuel injectors 22 of the cylinder 14a between each combustion cycle of the cylinder 14a to reduce local hot spots in the cylinder 14a. The injector control module 74 rotates the injection assignments through the fuel injectors 22 such that each of the fuel injectors 22 is controlled based on each of the injection assignments once every P combustion cycles of the cylinder 14a, where P is equal to the number of the fuel injectors 22 operable to inject fuel into the cylinder 14a. Thus, since there are three of the injectors 22 operable to inject fuel into the cylinder 14a in the example shown, the injector control module 74 controls each of the fuel injectors 22 based on each of the injection assignments once every three combustion cycles.

In one example, during a first combustion cycle of the cylinder, the injector control module 74 may control the fuel injector 22a based on the first injection assignment, control the fuel injector 22b based on the second injection assignment, and control the fuel injector 22c based on the third injection assignment. Then, during a second combustion cylinder immediately following the first combustion cycle, the injector control module 74 may control the first fuel injector 22a based on the second injection assignment, control the second fuel injector 22b based on the third injection assignment, and control the third fuel injector 22c based on the first injection assignment. Then, during a third combustion cylinder immediately following the second combustion cycle, the injector control module 74 may control the fuel injector 22a based on the third injection assignment, control the fuel injector 22b based on the first injection assignment, and control the fuel injector 22c based on the second injection assignment.

In the example above, the injector control module 74 rotates the injection assignment through the fuel injectors 22a, 22b, 22c in a counterclockwise manner. However, the injector control module 74 may rotate the injection assignments in any other pattern that controls each of the fuel injectors 22a, 22b, 22c based on each of the injection assignments once every P combustion cycles of the cylinder 14a. For example, the injector control module 74 may rotate the injection assignments in a clockwise or random manner.

In various implementations, one or more of the target injection parameters included in the injection assignments may have the same values. Thus, in the example above, the second and third SOI timing values may be equal to the first SOI timing value. In other words, the first SOI timing may be included in the first, second, and third injection assignments. In turn, the injectors 22a, 22b, 22c may start injecting fuel into the cylinder 14a at the same time. However, providing an offset between the first, second, and third SOI injecting timing values may be more effective in reducing local hot spots in the cylinder 14a. In one example, the difference between any two of the first, second, and third SOI injecting timing values may be between 1 and 9 degrees.

The target engine torque module 76 determines a target engine torque output. The target engine torque module 76 may determine the target engine torque output based on an operator torque demand signal 80 indicating an operator torque demand such as an accelerator pedal position and/or a cruise control setting. For example, the target engine torque module 76 may determine the target engine torque output based on a mapping of accelerator pedal position to target torque output. In addition, when the engine speed is equal to an idling speed, the target engine torque module 76 may set the target engine torque output equal to a minimum amount of torque output required to prevent an engine stall.

The target cylinder torque module 78 determines a target cylinder torque output for each of the cylinders 14. For example, the target cylinder torque module 78 may determine a first target cylinder torque output for the cylinder 14a, a second target cylinder torque output for the cylinder 14b, a third target cylinder torque output for the cylinder 14c, and a fourth target cylinder torque output for the cylinder 14(N). The target cylinder torque module 78 may determine the target cylinder torque output for each of the cylinders 14 during each firing order cycle of the engine system 10.

The target cylinder torque module 78 may determine the target cylinder torque output for each of the cylinder 14 based on the target engine torque output using, for example, a lookup table and/or an equation. The target cylinder torque module 78 may determine the target cylinder torque output for each of the cylinders 14 such that a sum of the target cylinder torque output values is equal to the target engine torque output. For example, the target cylinder torque module 78 may determine the first, second, third, and fourth target cylinder torque outputs such that a sum of the first, second, third, and fourth target cylinder torque outputs is equal to the target engine torque output.

The target cylinder torque module 78 may determine the target cylinder torque output for each of the cylinders 14 such that the actual cylinder torque output of each of the cylinders 14 does not exceed the mechanical limits of the engine system 10. The mechanical limits may be specified in terms of one or more engine operating conditions such as cylinder pressure, exhaust temperature, piston temperature, coolant temperature, oil temperature, cylinder liner temperature, or a combination thereof. The cylinder pressure and the exhaust temperature may be received from the CLP sensor 64 and the EXT sensor 66, respectively, or estimated based on other engine operating conditions using, for example, a mathematical model. The other engine operation conditions may also be measured or estimated using a mathematical model. The target cylinder torque module 78 may adjust the target cylinder torque output for each of the cylinders 14 to prevent the engine operating conditions from exceeding predetermined values. For example, the target cylinder torque module 78 may decrease the target cylinder torque output for one or more (e.g., all) of the cylinders 14 when the engine operating condition(s) are approaching predetermined upper limit(s).

The target cylinder torque module 78 may determine the target cylinder torque output for each of the cylinders 14 such that an average of the actual torque output of the engine system 10 over multiple combustion cycles of the cylinders 14 is equal to the target engine torque output. Additionally or alternatively, the target cylinder torque module 78 may determine the target cylinder torque output for each of the cylinders 14 such that an average of the actual torque output of the engine system 10 over multiple firing order cycles of the engine system 10 is equal to the target engine torque output.

The target cylinder torque module 78 may determine the target cylinder torque output for each of the cylinders 14 based on whether one or more of the cylinders 14 are deactivated. For example, if the cylinder 14a is deactivated, the target cylinder torque module 78 may set the target cylinder torque output for the cylinder 14a equal to zero. The target cylinder torque module 78 may determine whether the cylinders 14 are deactivated based on a cylinder deactivation command. The ECM 68 may generate the cylinder deactivation command when the engine system 10 can satisfy the target engine torque output while one or more of the cylinders 14 are deactivated.

The injector control module 74 may determine the target injection parameters for the fuel injectors 22 of the cylinder 14a based on the target cylinder torque output of the cylinder 14a using, for example, a lookup table and/or an equation. The injector control module 74 may advance or retard the target SOI timing of the cylinder 14a as the target cylinder torque output of the cylinder 14a increases or decreases, respectively. The injector control module 74 may increase or decrease the target pulse width as the target cylinder torque output of the cylinder 14a increases or decreases, respectively. The injector control module 74 may increase or decrease the target number of injections per combustion cycle of the cylinder 14a as the target cylinder torque output of the cylinder 14a increases or decreases, respectively. The injector control module 74 may determine the target injection parameters for the fuel injectors 22 of the other cylinders 14b, 14c, 14(N) in a similar manner.

To further reduce local hot spots within the cylinders 14, the target cylinder torque module 78 may rotate target cylinder torque values through the cylinders 14. For example, the target cylinder torque module 78 may assign each of the target cylinder torque values to each of the cylinders 14 once every Q firing order cycles of the engine system 10, where Q is equal to the number of the cylinders 14 in the engine system 10. Thus, the injector control module 74 may control the fuel injectors 22 of the cylinders 14a, 14b, 14c, 14(N) based on first, second, third, and fourth target cylinder torque values, respectively, during one firing order cycle of the engine system 10. Then, during the next firing order cycle of the engine system 10, the injector control module 74 may control the fuel injectors 22 of the cylinders 14a, 14b, 14c, 14(N) based on fourth, first, second, and third target cylinder torque values, respectively,

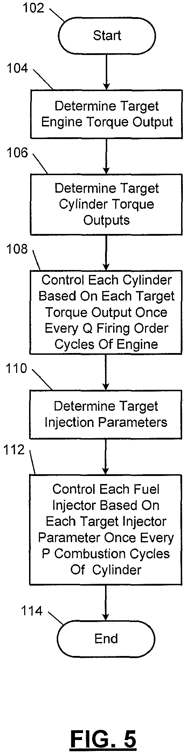

Referring now to Figure 5, an example multi injector thermal management method begins at 102. The method is described in the context of the modules of Figure 4. However, the particular modules that perform the steps of the method may be different than the modules mentioned below and/or the method may be implemented apart from the modules of Figure 4.

At 104, the target engine torque module 76 determines the target engine torque output for the engine system 10. At 106, the target cylinder torque module 78 determines multiple target cylinder torque output values, with the number of target cylinder torque output values being equal to the number of the cylinders 14. At 108, the target cylinder torque module 78 controls each of the cylinders 14 based on each of the target cylinder torque output values once every Q firing order cycles of the engine system 10, where Q is equal to the number of the cylinders 14 in the engine system 10.

At 110, the injector control module 74 determines target injection parameters for each of the fuel injections performed by the fuel injectors 22 of the cylinders 14a. As discussed above, the target injection parameters may include a target SOI timing, a target pulse width, and a target number of injections per combustion cycle of the cylinder 14a. In addition, the target injection parameters for a single combustion cycle may be collectively referred to as an injection assignment.

At 112, the injector control module 74 controls each of the fuel injectors 22 of the cylinder 14a based on each of the target injection parameters (or each of the injection assignments) once every P combustion cycles of the cylinder 14a, where P is equal to the number of the fuel injectors 22 that are operable to inject fuel into the cylinder 14a. Although 110 and 112 are described with reference to the cylinder 14a, the injector control module 74 may control the fuel injectors 22 of the cylinders 14b, 14c, 14d, and 14(N) in a similar manner.

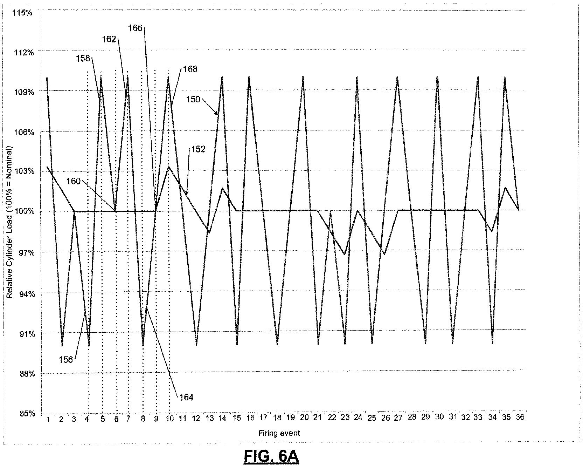

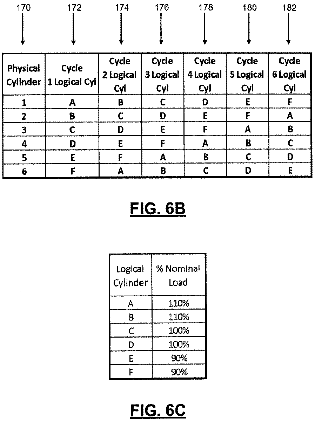

Referring now to Figures 6A, 6B, and 6C, an example method of rotating target cylinder torque or load values through the cylinders 14 is illustrated. Figure 6A is a graph illustrating a cylinder load (or torque) signal 150 over multiple firing events (or multiple combustion cycles) and an average load (or torque) signal 152 over the same firing events (or combustion cycles). The magnitudes of the cylinder load signal 150 and the average load signal 152 are expressed as a percentage of a nominal or target engine torque or load, where the nominal load is equal to 100 percent.

The cylinder load signal 150 is a signal representing target cylinder torque output values for the firing events. For example, the target cylinder torque output values include target cylinder torque output values 156, 158, 160, 162, 164 that correspond to firing events 4, 5, 6, 7, 8, respectively. Notably, the target cylinder torque output value 160 is equal to zero, indicating that a cylinder is deactivated. The average load signal 152 is a signal representing the average value of the target cylinder torque values. Thus, the average load signal is equal to the nominal engine load during the firing events 4, 5, 6, 7, 8 since the average value of the target cylinder torque output values 156, 158, 160, 162, 164 is equal to the nominal engine load.

A system and method according to the present disclosure may adjust the target cylinder torque values to minimize the difference between the nominal load and the average value of the target cylinder torque values over any set (e.g., two or more) of consecutive firing events. This is achieve for the firing events 4, 5, 6, 7, 8 since the average value of the target cylinder torque output values 156, 158, 160, 162, 164 is equal to the nominal engine load. However, this is not achieved for firing events 9, 10, as the average value of target cylinder torque output values 166, 168 corresponding to the firing events 8, 9, respectively, is greater than the nominal load.

Figure 6B is a table listing logical cylinders (or cylinder load assignments) A-F for each cylinder in a six-cylinder engine over six firing order cycles of the engine. Column 170 indicates physical cylinders (or cylinder numbers) 1-6 of the engine, where the engine has a firing order of 1-5-3-6-2-4. Columns 172-182 indicate logical cylinders for each of the physical cylinders over firing order cycles 1-6, respectively. Figure 6C is a table indicating the percentage of nominal load corresponding to each logical cylinder.

In the example shown, the logical cylinders A-F are assigned to the physical cylinders 1-6, respectively, for firing order cycle 1. Then, for firing order cycle 2, the logical cylinders A-F are shifted upward through column 174 with the exception of logical cylinder A, which is moved downward to the row corresponding to the physical cylinder 6. The logical cylinders A-F are rotated through the physical cylinder 1-6 in this manner throughout the remainder of the firing cycles 1-6.

The foregoing description is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited since other modifications will become apparent upon a study of the drawings, the specification, and the following claims. As used herein, the phrase at least one of A, B, and C should be construed to mean a logical (A OR B OR C), using a non-exclusive logical OR, and should not be construed to mean "at least one of A, at least one of B, and at least one of C." It should be understood that one or more steps within a method may be executed in different order (or concurrently) without altering the principles of the present disclosure.

In this application, including the definitions below, the term "module" or the term "controller" may be replaced with the term "circuit." The term "module" may refer to, be part of, or include: an Application Specific Integrated Circuit (ASIC); a digital, analog, or mixed analog/digital discrete circuit; a digital, analog, or mixed analog/digital integrated circuit; a combinational logic circuit; a field programmable gate array (FPGA); a processor circuit (shared, dedicated, or group) that executes code; a memory circuit (shared, dedicated, or group) that stores code executed by the processor circuit; other suitable hardware components that provide the described functionality; or a combination of some or all of the above, such as in a system-on-chip.

The module may include one or more interface circuits. In some examples, the interface circuits may include wired or wireless interfaces that are connected to a local area network (LAN), the Internet, a wide area network (WAN), or combinations thereof. The functionality of any given module of the present disclosure may be distributed among multiple modules that are connected via interface circuits. For example, multiple modules may allow load balancing. In a further example, a server (also known as remote, or cloud) module may accomplish some functionality on behalf of a client module.

The term code, as used above, may include software, firmware, and/or microcode, and may refer to programs, routines, functions, classes, data structures, and/or objects. The term shared processor circuit encompasses a single processor circuit that executes some or all code from multiple modules. The term group processor circuit encompasses a processor circuit that, in combination with additional processor circuits, executes some or all code from one or more modules. References to multiple processor circuits encompass multiple processor circuits on discrete dies, multiple processor circuits on a single die, multiple cores of a single processor circuit, multiple threads of a single processor circuit, or a combination of the above. The term shared memory circuit encompasses a single memory circuit that stores some or all code from multiple modules. The term group memory circuit encompasses a memory circuit that, in combination with additional memories, stores some or all code from one or more modules.

The term memory circuit is a subset of the term computer-readable medium. The term computer-readable medium, as used herein, does not encompass transitory electrical or electromagnetic signals propagating through a medium (such as on a carrier wave); the term computer-readable medium may therefore be considered tangible and non-transitory. Non-limiting examples of a non-transitory, tangible computer-readable medium are nonvolatile memory circuits (such as a flash memory circuit, an erasable programmable read-only memory circuit, or a mask read-only memory circuit), volatile memory circuits (such as a static random access memory circuit or a dynamic random access memory circuit), magnetic storage media (such as an analog or digital magnetic tape or a hard disk drive), and optical storage media (such as a CD, a DVD, or a Blu-ray Disc).

The apparatuses and methods described in this application may be partially or fully implemented by a special purpose computer created by configuring a general purpose computer to execute one or more particular functions embodied in computer programs. The functional blocks, flowchart components, and other elements described above serve as software specifications, which can be translated into the computer programs by the routine work of a skilled technician or programmer.

The computer programs include processor-executable instructions that are stored on at least one non-transitory, tangible computer-readable medium. The computer programs may also include or rely on stored data. The computer programs may encompass a basic input/output system (BIOS) that interacts with hardware of the special purpose computer, device drivers that interact with particular devices of the special purpose computer, one or more operating systems, user applications, background services, background applications, etc.

The computer programs may include: (i) descriptive text to be parsed, such as HTML (hypertext markup language) or XML (extensible markup language), (ii) assembly code, (iii) object code generated from source code by a compiler, (iv) source code for execution by an interpreter, (v) source code for compilation and execution by a just-in-time compiler, etc. As examples only, source code may be written using syntax from languages including C, C++, C#, Objective C, Haskell, Go, SQL, R, Lisp, Java®, Fortran, Perl, Pascal, Curl, OCaml, Javascript®, HTML5, Ada, ASP (active server pages), PHP, Scala, Eiffel, Smalltalk, Erlang, Ruby, Flash®, Visual Basic®, Lua, and Python®.

None of the elements recited in the claims are intended to be a means-plus-function element within the meaning of 35 U.S.C. §112(f) unless an element is expressly recited using the phrase "means for," or in the case of a method claim using the phrases "operation for" or "step for."

It follows a list of further embodiments:
1. A system comprising:
   a crankshaft position sensor that measures an angular position of a crankshaft in an engine; and
   an injector control module that:
      controls a first fuel injector and a second fuel injector to inject fuel into a first cylinder of the engine based on the measured crankshaft position;
      controls the first fuel injector based on a first target injection parameter once every N firing cycles of the first cylinder, wherein the first target injection parameter includes at least one of a first pulse width and a first start-of-injection (SOI) timing, and N is equal to the number of fuel injectors that are operable to inject fuel into the first cylinder;
      controls the first fuel injector based on a second target injection parameter once every N firing cycles of the first cylinder, wherein the second target injection parameter includes at least one of a second pulse width and a second SOI timing that are different than the first pulse width and the first SOI timing, respectively;
      controls the second fuel injector based on the first target injection parameter once every N firing cycles of the first cylinder; and
      controls the second fuel injector based on the second target injection parameter once every N firing cycles of the first cylinder.
2. The system of embodiment 1 wherein the injector control module determines the first target injection parameter and the second target injection parameter based on at least one of an engine speed and an engine load.
3. The system of claim embodiment 1 wherein the first target injection parameter includes the first pulse width and the first SOI timing, and the second target injection parameter includes the second pulse width and the second SOI timing.
4. The system of embodiment 1 wherein the first target injection parameter includes the first pulse width and the first SOI timing, and the second target injection parameter includes the second pulse width and the first SOI timing.
5. The system of embodiment 1 wherein:
   the first target injection parameter further includes a first number of injections per firing cycle of the first cylinder;
   the second target injection parameter further includes a second number of injections per firing cycle of the first cylinder; and
   the first number of injections and the second number of injections are different than one another.
6. The system of embodiment 1 wherein the injector control module:
   controls a third fuel injector to inject fuel into the first cylinder based on the measured crankshaft position;
   controls the first fuel injector based on a third target injection parameter once every N firing cycles of the first cylinder, wherein the third target injection parameter includes at least one of a third pulse width and a third SOI timing that are different than the first pulse width and the first SOI timing, respectively, and different than the second pulse width and the second SOI timing, respectively;
   controls the second fuel injector based on the third target injection parameter once every N firing cycles of the first cylinder;
   controls the third fuel injector based on the first target injection parameter once every N firing cycles of the first cylinder;
   controls the third fuel injector based on the second target injection parameter once every N firing cycles of the first cylinder; and
   controls the third fuel injector based on the third target injection parameter once every N firing cycles of the first cylinder.
7. The system of embodiment 6 wherein the first target injection parameter includes the first pulse width and the first SOI timing, the second target injection parameter includes the second pulse width and the second SOI timing, and the third target injection parameter includes the third pulse width and the third SOI timing.
8. The system of embodiment 6 wherein the first target injection parameter includes the first pulse width and the first SOI timing, the second target injection parameter includes the second pulse width and the first SOI timing, and the third target injection parameter includes the third pulse width and the first SOI timing.
9. The system of embodiment 6 wherein:
   the first target injection parameter further includes a first number of injections per firing cycle of the first cylinder;
   the second target injection parameter further includes a second number of injections per firing cycle of the first cylinder;
   the third target injection parameter further includes a third number of injections per firing cycle of the first cylinder; and
   the first number of injections, the second number of injections, and the third number of injections are different than one another.
10. The system of embodiment 1 wherein the injector control module:
   controls a third fuel injector and a fourth fuel injector to inject fuel into a second cylinder of the engine based on the measured crankshaft position;
   controls the third fuel injector based on a third target injection parameter once every P firing cycles of the second cylinder, wherein the third target injection parameter includes at least one of a third pulse width and a third SOI timing, and P is equal to the number of fuel injectors that are operable to inject fuel into the second cylinder;
   controls the third fuel injector based on a fourth target injection parameter once every P firing cycles of the second cylinder, wherein the fourth target injection parameter includes at least one of a fourth pulse width and a fourth SOI timing that are different than the third pulse width and the third SOI timing, respectively;
   controls the fourth fuel injector based on the third target injection parameter once every P firing cycles of the second cylinder; and
   controls the fourth fuel injector based on the fourth target injection parameter once every P firing cycles of the second cylinder.
11. The system of embodiment 10 wherein the injector control module:
   controls the first fuel injector and the second fuel injector based on a first target torque output once every Q firing order cycles of the engine, wherein Q is equal to the number of cylinders in the engine;
   controls the first fuel injector and the second fuel injector based on a second target torque output once every Q firing order cycles of the engine, wherein the second target torque output is different than the first target torque output;
   controls the third fuel injector and the fourth fuel injector based on the first target torque output once every Q firing order cycles of the engine; and
   controls the third fuel injector and the fourth fuel injector based on a second target torque output once every Q firing order cycles of the engine.
12. The system of embodiment 11 wherein a sum of the first target torque output and the second target torque output is equal to a target engine torque output.
13. The system of embodiment 11 further comprising a target cylinder torque module that determines the first target torque output and the second target torque output such that an average torque output of the engine is equal to a target engine torque output.
14. The system of embodiment 11 further comprising a target cylinder torque module that determines the first target torque output and the second target torque output based on an exhaust temperature, a cylinder pressure, and a cylinder deactivation command.
15. The system of embodiment 11 wherein the injector control module:
   controls a fifth fuel injector to inject fuel into the first cylinder based on the measured crankshaft position;
   controls a sixth fuel injector to inject fuel into the second cylinder based on the measured crankshaft position;
   controls the first fuel injector, the second fuel injector, and the fifth fuel injector based on the first target torque output once every Q firing order cycles of the engine; and
   controls the third fuel injector, the fourth fuel injector, and the sixth fuel injector based on the second target torque output once every Q firing order cycles of the engine.
16. A method comprising:
   measuring an angular position of a crankshaft in an engine; and
   controlling a first fuel injector and a second fuel injector to inject fuel into a first cylinder of the engine based on the measured crankshaft position;
   controlling the first fuel injector based on a first target injection parameter once every N firing cycles of the first cylinder, wherein the first target injection parameter includes at least one of a first pulse width and a first start-of-injection (SOI) timing, and N is equal to the number of fuel injectors that are operable to inject fuel into the first cylinder;
   controlling the first fuel injector based on a second target injection parameter once every N firing cycles of the first cylinder, wherein the second target injection parameter includes at least one of a second pulse width and a second SOI timing that are different than the first pulse width and the first SOI timing, respectively;
   controlling the second fuel injector based on the first target injection parameter once every N firing cycles of the first cylinder; and
   controlling the second fuel injector based on the second target injection parameter once every N firing cycles of the first cylinder.
17. The method of embodiment 16 further comprising determining the first target injection parameter and the second target injection parameter based on at least one of an engine speed and an engine load.
18. The method of embodiment 16 wherein the first target injection parameter includes the first pulse width and the first SOI timing, and the second target injection parameter includes the second pulse width and the second SOI timing.
19. The method of embodiment 16 wherein the first target injection parameter includes the first pulse width and the first SOI timing, and the second target injection parameter includes the second pulse width and the first SOI timing.
20. The method of embodiment 16 wherein:
   the first target injection parameter further includes a first number of injections per firing cycle of the first cylinder;
   the second target injection parameter further includes a second number of injections per firing cycle of the first cylinder; and
   the first number of injections and the second number of injections are different than one another.
21. The method of embodiment 16 further comprising:
   controlling a third fuel injector to inject fuel into the first cylinder based on the measured crankshaft position;
   controlling the first fuel injector based on a third target injection parameter once every N firing cycles of the first cylinder, wherein the third target injection parameter includes at least one of a third pulse width and a third SOI timing that are different than the first pulse width and the first SOI timing, respectively, and different than the second pulse width and the second SOI timing, respectively;
   controlling the second fuel injector based on the third target injection parameter once every N firing cycles of the first cylinder;
   controlling the third fuel injector based on the first target injection parameter once every N firing cycles of the first cylinder;
   controlling the third fuel injector based on the second target injection parameter once every N firing cycles of the first cylinder; and
   controlling the third fuel injector based on the third target injection parameter once every N firing cycles of the first cylinder.
22. The method of embodiment 21 wherein the first target injection parameter includes the first pulse width and the first SOI timing, the second target injection parameter includes the second pulse width and the second SOI timing, and the third target injection parameter includes the third pulse width and the third SOI timing.
23. The method of embodiment 21 wherein the first target injection parameter includes the first pulse width and the first SOI timing, the second target injection parameter includes the second pulse width and the first SOI timing, and the third target injection parameter includes the third pulse width and the first SOI timing.
24. The method of embodiment 21 wherein:
   the first target injection parameter further includes a first number of injections per firing cycle of the first cylinder;
   the second target injection parameter further includes a second number of injections per firing cycle of the first cylinder;
   the third target injection parameter further includes a third number of injections per firing cycle of the first cylinder; and
   the first number of injections, the second number of injections, and the third number of injections are different than one another.
25. The method of embodiment 16 further comprising:
   controlling a third fuel injector and a fourth fuel injector to inject fuel into a second cylinder of the engine based on the measured crankshaft position;
   controlling the third fuel injector based on a third target injection parameter once every P firing cycles of the second cylinder, wherein the third target injection parameter includes at least one of a third pulse width and a third SOI timing, and P is equal to the number of fuel injectors that are operable to inject fuel into the second cylinder;
   controlling the third fuel injector based on a fourth target injection parameter once every P firing cycles of the second cylinder, wherein the fourth target injection parameter includes at least one of a fourth pulse width and a fourth SOI timing that are different than the third pulse width and the third SOI timing, respectively;
   controlling the fourth fuel injector based on the third target injection parameter once every P firing cycles of the second cylinder; and
   controlling the fourth fuel injector based on the fourth target injection parameter once every P firing cycles of the second cylinder.
26. The method of embodiment 25 further comprising:
   controlling the first fuel injector and the second fuel injector based on a first target torque output once every Q firing order cycles of the engine, wherein Q is equal to the number of cylinders in the engine;
   controlling the first fuel injector and the second fuel injector based on a second target torque output once every Q firing order cycles of the engine, wherein the second target torque output is different than the first target torque output;
   controlling the third fuel injector and the fourth fuel injector based on the first target torque output once every Q firing order cycles of the engine; and
   controlling the third fuel injector and the fourth fuel injector based on a second target torque output once every Q firing order cycles of the engine.
27. The method of embodiment 26 wherein a sum of the first target torque output and the second target torque output is equal to a target engine torque output.
28. The method of embodiment 26 further comprising determining the first target torque output and the second target torque output such that an average torque output of the engine is equal to a target engine torque output.
29. The method of embodiment 26 further comprising determining the first target torque output and the second target torque output based on an exhaust temperature, a cylinder pressure, and a cylinder deactivation command.
30. The method of embodiment 26 wherein:
   controlling a fifth fuel injector to inject fuel into the first cylinder based on the measured crankshaft position;
   controlling a sixth fuel injector to inject fuel into the second cylinder based on the measured crankshaft position;
   controlling the first fuel injector, the second fuel injector, and the fifth fuel injector based on the first target torque output once every Q firing order cycles of the engine; and
   controlling the third fuel injector, the fourth fuel injector, and the sixth fuel injector based on the second target torque output once every Q firing order cycles of the engine.

## Claims

1. A system comprising:
a crankshaft position sensor (60) that measures an angular position of a crankshaft (58) in an engine (10); and
an injector control module (74) that:
controls a first fuel injector (22a) and a second fuel injector (22b) to inject fuel into a first cylinder (14a) of the engine (10) based on the measured crankshaft position;
controls the first fuel injector (22a) based on a first target injection parameter once every N firing cycles of the first cylinder (14a), wherein the first target injection parameter includes at least one of a first pulse width and a first start-of-injection (SOI) timing, and N is equal to the number of fuel injectors that are operable to inject fuel into the first cylinder (14a);
controls the first fuel injector (22a) based on a second target injection parameter once every N firing cycles of the first cylinder (14a), wherein the second target injection parameter includes at least one of a second pulse width and a second SOI timing that are different than the first pulse width and the first SOI timing, respectively;
controls the second fuel injector (22b) based on the first target injection parameter once every N firing cycles of the first cylinder (14a); and
controls the second fuel injector (22b) based on the second target injection parameter once every N firing cycles of the first cylinder (14a).

2. The system of claim 1 wherein the first target injection parameter includes the first pulse width and the first SOI timing, and the second target injection parameter includes the second pulse width and the second SOI timing.

3. The system of claim 1 wherein the first target injection parameter includes the first pulse width and the first SOI timing, and the second target injection parameter includes the second pulse width and the first SOI timing.

4. The system of any one of the preceding claims wherein:
the first target injection parameter further includes a first number of injections per firing cycle of the first cylinder (14a);
the second target injection parameter further includes a second number of injections per firing cycle of the first cylinder (14a); and
the first number of injections and the second number of injections are different than one another.

5. The system of any one of the preceding claims wherein the injector control module:
controls a third fuel injector (22c) to inject fuel into the first cylinder (14a) based on the measured crankshaft position;
controls the first fuel injector (22a) based on a third target injection parameter once every N firing cycles of the first cylinder (14a), wherein the third target injection parameter includes at least one of a third pulse width and a third SOI timing that are different than the first pulse width and the first SOI timing, respectively, and different than the second pulse width and the second SOI timing, respectively;
controls the second fuel injector (22b) based on the third target injection parameter once every N firing cycles of the first cylinder (14a);
controls the third fuel injector (22c) based on the first target injection parameter once every N firing cycles of the first cylinder (14a);
controls the third fuel injector (22c) based on the second target injection parameter once every N firing cycles of the first cylinder (14a); and
controls the third fuel injector (22c) based on the third target injection parameter once every N firing cycles of the first cylinder (14a).

6. The system of claim 5 wherein the first target injection parameter includes the first pulse width and the first SOI timing, the second target injection parameter includes the second pulse width and the second SOI timing, and the third target injection parameter includes the third pulse width and the third SOI timing.

7. The system of claims 5 or 6 wherein:
the first target injection parameter further includes a first number of injections per firing cycle of the first cylinder (14a);
the second target injection parameter further includes a second number of injections per firing cycle of the first cylinder (14a);
the third target injection parameter further includes a third number of injections per firing cycle of the first cylinder (14a); and
the first number of injections, the second number of injections, and the third number of injections are different than one another.

8. A method comprising:
measuring an angular position of a crankshaft (58) in an engine (10);
controlling a first fuel injector (22a) and a second fuel injector (22b) to inject fuel into a first cylinder (14a) of the engine (10) based on the measured crankshaft position;
controlling the first fuel injector (22a) based on a first target injection parameter once every N firing cycles of the first cylinder (14a), wherein the first target injection parameter includes at least one of a first pulse width and a first start-of-injection (SOI) timing, and N is equal to the number of fuel injectors that are operable to inject fuel into the first cylinder (14a);
controlling the first fuel injector (22a) based on a second target injection parameter once every N firing cycles of the first cylinder (14a), wherein the second target injection parameter includes at least one of a second pulse width and a second SOI timing that are different than the first pulse width and the first SOI timing, respectively;
controlling the second fuel injector (22b) based on the first target injection parameter once every N firing cycles of the first cylinder (14a); and
controlling the second fuel injector (22b) based on the second target injection parameter once every N firing cycles of the first cylinder (14a).

9. The method of claim 8, wherein the first target injection parameter includes the first pulse width and the first SOI timing, and the second target injection parameter includes the second pulse width and the second SOI timing.

10. The method of claim 8, wherein the first target injection parameter includes the first pulse width and the first SOI timing, and the second target injection parameter includes the second pulse width and the first SOI timing.

11. The method of claims 8, 9, or 10, wherein:
the first target injection parameter further includes a first number of injections per firing cycle of the first cylinder (14a);
the second target injection parameter further includes a second number of injections per firing cycle of the first cylinder (14a); and
the first number of injections and the second number of injections are different than one another.

12. The method of claims 8, 9, 10, or 11, further comprising:
controlling a third fuel injector (22c) to inject fuel into the first cylinder (14a) based on the measured crankshaft position;
controlling the first fuel injector (22a) based on a third target injection parameter once every N firing cycles of the first cylinder (14a), wherein the third target injection parameter includes at least one of a third pulse width and a third SOI timing that are different than the first pulse width and the first SOI timing, respectively, and different than the second pulse width and the second SOI timing, respectively;
controlling the second fuel injector (22b) based on the third target injection parameter once every N firing cycles of the first cylinder (14a);
controlling the third fuel injector (22c) based on the first target injection parameter once every N firing cycles of the first cylinder (14a);
controlling the third fuel injector (22c) based on the second target injection parameter once every N firing cycles of the first cylinder (14a); and
controlling the third fuel injector (22c) based on the third target injection parameter once every N firing cycles of the first cylinder (14a).

13. The method of claim 12, wherein the first target injection parameter includes the first pulse width and the first SOI timing, the second target injection parameter includes the second pulse width and the second SOI timing, and the third target injection parameter includes the third pulse width and the third SOI timing.

14. The method of claim 12, wherein the first target injection parameter includes the first pulse width and the first SOI timing, the second target injection parameter includes the second pulse width and the first SOI timing, and the third target injection parameter includes the third pulse width and the first SOI timing.

15. The method of claims 12, 13, or 14, wherein:
the first target injection parameter further includes a first number of injections per firing cycle of the first cylinder (14a);
the second target injection parameter further includes a second number of injections per firing cycle of the first cylinder (14a);
the third target injection parameter further includes a third number of injections per firing cycle of the first cylinder (14a); and
the first number of injections, the second number of injections, and the third number of injections are different than one another.
